# EUROPÄISCHE PATENTSCHRIFT

(11) **EP 0 405 346 B1**
(45) Veröffentlichungstag und Bekanntmachung des Hinweises auf die Patenterteilung: **20.09.1995**
(21) Anmeldenummer: 90111838.0
(22) Anmeldetag: 22.06.1990
(51) Int. Cl.: G02F 1/137, C09K 19/02

(54) **Bistabile ferroelektrische Flüssigkristallanzeige**
Bistable ferroelectric liquid cristal display
Afficheur à cristal-liquide ferro-électrique bistable

(30) Priorität: 29.06.1989 CH 2408/89; 30.06.1989 CH 2447/89; 18.10.1989 CH 3780/89
(43) Veröffentlichungstag der Anmeldung: 02.01.1991
(73) Patentinhaber: F. HOFFMANN-LA ROCHE AG, 4002 Basel (CH); NIOPIC MOSCOW RESEARCH AND PRODUCTION ASSOCIATION, Moskau 103787 (SU)
(72) Erfinder: Beresnev, Leonid Alexeevich, Moskau 117393 (SU); Buchecker, Richard, Dr., CH-8008 Zürich (CH); Chernova, Nina Ivanovna, Moskau, 105523 (SU); Chigrinov, Vladimir Grigorievich, Moskau, 123481 (SU); Fünfschilling, Jürg, Dr., CH-4054 Basel (CH); Loseva, Marina Vasilievna, Moskau, 125502 (SU); Panarin, Yury Petrovich, Moskau, 141700 (SU); Pozhidaev, Evgeniy Pavlovich, Moskau, 127322 (SU); Schadt, Martin, Dr., CH-4411 Seltisberg (CH)
(74) Vertreter: Buntz, Gerhard

(56) Entgegenhaltungen:
- EP-A- 0 283 916
- EP-A- 0 309 774
- SOVIET TECHNICAL PHYSICS LETTERS. Bd. 14, Nr. 2, Februar 1988, NEW YORK US Seiten 116 - 117; L.A. BERESNEV ET AL.: 'Electrooptic response of a thin layer of a FLC with a small helicoid pitch and a high spontaneous polarization '

## Beschreibung

Die Erfindung betrifft eine Flüssigkristallanzeigezelle mit einer chiralen ferroelektrischen smektischen Flüssigkristallschicht, aus einer achiralen S_{C} Host-Mischung, bestehend aus mindestens zwei Flüssigkristall-Komponenten, von denen mindestens eine eine gekippte smektische Phase aufweist (z.B. S_{C}), sowie einem oder mehreren chiralen Dotierstoffen die einzeln oder zusammen eine Helixganghöhe (Pitch p) p < 1 µm in der Mischung induzieren, mit einer spontanen Polarisierbarkeit P > 10 nC/cm² und einem S_{C}-Kippwinkel von Θ > 10°, deren Struktur durch Einwirkung eines elektrischen Feldes derart beeinflussbar ist, dass sich ihre optische Anisotropie ändert, einem Paar den Flüssigkristall einschliessender, transparenter Platten, die Elektroden zur Erzeugung eines elektrischen Feldes im Flüssigkristall aufweisen und von denen wenigstens eine mit einer die Moleküle des Flüssigkristalls ausrichtenden Oberflächenstruktur versehen ist, und zwei gekreuzten Polarizatoren von denen einer vor und einer hinter dem Flüssigkristall angeordnet ist.

Flüssigkristallzellen der vorstehenden Art reagieren auf das Ein- und Ausschalten starker elektrischer Felder (z.B. 10 V/µ) je nach Art des Flüssigkristalles verschieden: beim Einschalten bildet sich in den meisten Fällen eine annähernd homogene Struktur (eventuell mit vielen Versetzungen), beim Ausschalten kann sich eine Helix bilden, wie dies bei sog. DHF-Zellen der Fall ist, deren Grundlagen in Ostrovski, B.I., Advances in Liquid Crystal Research and Applications, Oxford/Budapest, 1980, Seiten 469 ff. beschrieben sind. Eine praktisch nutzbare DHF-Zelle ist erstmals in EP-A-309 774 beschrieben. Sie enthält eine Schicht aus einem hochverdrillten ferroelektrischen Flüssigkristall mit der Helixachse parallel zu den begrenzenden Platten. Durch Anlegen einer Spannung zwischen den Platten wird die Helix derart deformiert, dass sich in Kombination mit den vor und hinter der Flüssigkristallschicht angeordneten Polarisatoren die Transmission ändert.

Ein bekannter, jedoch anders gearteter Effekt ist der sog. Surface Stabilized Ferroelectric Liquid Crystal (SSFLC) Effekt von Lagerwall und Clark, dessen Hauptcharakteristikum ist, dass die Helix, die sich normalerweise in den verwendeten Flüssigkristallen ausbildet, durch Wechselwirkung mit der Oberfläche unterdrückt wird. Voraussetzung für diese Helixunterdrückung ist dabei, dass die Ganghöhe der Helix wesentlich länger als die Dicke des Displays ist. Dieser Effekt ist in Mol.Cryst.Lig.Cryst. 94 (1983), 213-134 und 114 (1984), 151-187 beschrieben.

In der europäischen Patentanmeldung EP-A-0 283 916 (Nr. 88104176.8) ist eine andere Flüssigkristallanzeige beschrieben, die auch Flüssigkristalle mit kleiner Ganghöhe benutzt. Dort besteht die Struktur des Flüssigkristalles in der Zelle aus homogen orientierten Randschichten (wie in SSF-LCDs) und einer Helix-Struktur im Inneren der Zelle.

Die bekannten Zellen haben den Nachteil, dass die kritische Wandorientierung Schwierigkeiten macht. Ausserdem sind die sog. Memory-Schaltwinkel wesentlich kleiner als das Optimum von 45°. Der Erfindung liegt die Aufgabe zugrunde, diese Nachteile zu beheben.

Erfindungsgemäss wird dies erreicht durch eine Zelle der eingangs angegebenen Art, die sich durch die im Anspruch 1 angegebenen Merkmale auszeichnet.

Es wurde nämlich überraschend gefunden, dass bei geeigneter Flüssigkristallzusammensetzung die Bildung der Helix unterbleibt, oder stark verzögert wird (Sekunden bis Stunden) und die homogene Struktur erhalten bleibt, indem sie durch ein Netz von parallelen, unter gekreuzten Polarisatoren als dunkle Linien sichtbaren Versetzungen stabilisiert wird. Wird kurzzeitig ein Feld in entgegengesetzter Richtung angelegt, bildet sich wieder eine homogene Struktur, deren optische Achse aber um den sog. bistabilen Schaltwinkel gegenüber der ersten Richtung gedreht ist. Dies erlaubt also bistabiles Schalten zwischen zwei stabilen oder quasi-stabilen Lagen des Direktors.

Dieser Effekt ist auch bei dicken Zellen (z.B. 25µ) beobachtbar. Dies steht im Gegensatz zu dem SSFLC-Effekt.

Die erfindungsgemässe Zelle zeichnet sich durch eine Reihe von wesentlichen Vorteilen aus.

Sie weist eine grosse Helligkeit auf. Im Gegensatz zu SSF-LCDs ist der sog. Memory-Schaltwinkel fast gleich dem Schaltwinkel bei Sättigung, d.h. die Stabilisierung der bistabilen Struktur ist effizient auch bei Spannung Null. Dies hat zur Folge, dass optimale Memory-Schaltwinkel (45°) realisierbar sind.

Sie besitzt rasche Schaltzeiten. Da die LC-Mischungen grosse spontane Polarisation haben, sind auch die Schaltzeiten entsprechend kurz. Probleme wie die sog. Pitch-Kompensation entfallen.

Man ist in der Wahl der Zelldicke ziemlich frei. Die Bistabilität beruht nicht auf einem Oberflächeneffekt. Daher ist die Wahl der Zelldicke nicht eingeschränkt. Allerdings sind dünne Zellen mit Δn.d = λ/2 mit λ= Wellenlänge (0.55 µ) optimal.

Schliesslich ist die Wandorientierung weniger kritisch als beim Stand der Technik. Die bistabile Struktur der Flüssigkristallschicht wird wesentlich durch das angelegte Feld bestimmt, die Oberfläche ist nicht für die Bistabilität, sondern nur für die Ausrichtung der smektischen Ebenen beim Uebergang zur S_{C}*-Phase verantwortlich.

Im folgenden werden anhand der beiliegenden Zeichnungen Ausführungsbeispiele der Erfindung beschrieben. Es zeigen
- Fig. 1: eine schematische perspektivische Darstellung eines kleinen Ausschnitts aus einer Flüssigkristallzelle nach einer bevorzugten Ausführungsform der Erfindung,
- Fig. 2: die Textur einer Zelle nach einer bevorzugten Ausführungsform der Erfindung
- Fig. 3: die Textur einer sog. DHF-Zelle nach dem Stand der Technik
- Fig. 4: Ausschnitt aus einer Pulsfolge für die Ansteuerung der Zelle nach Fig. 1
- Fig. 5: die Transmission einer 1.8µ dicken Zelle für die in Fig. 4 skizzierte Pulsfolge.

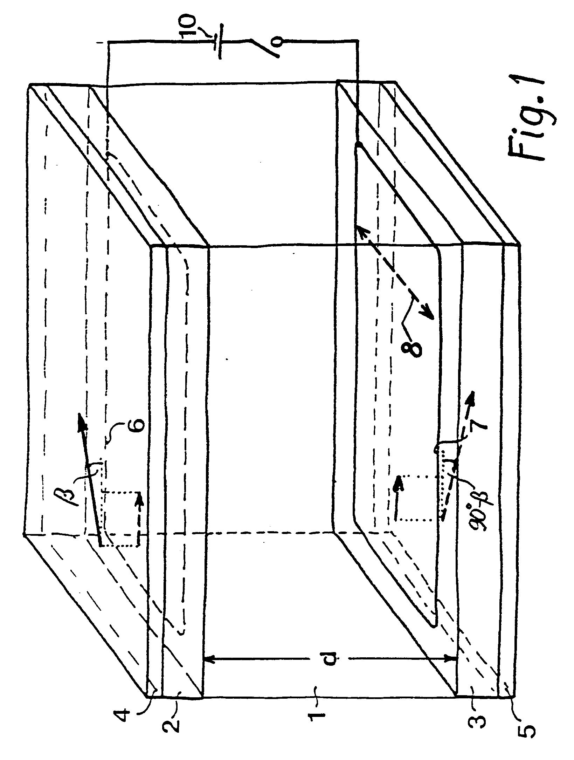

Wie in Fig. 1 gezeigt, besteht die vorliegende Flüssigkristallzelle aus einer Flüssigkristallschicht 1, die zwischen zwei im wesentlichen zueinander planparallelen Glasplatten 2,3 angeordnet ist. Anstelle von Glas kann auch ein anderes durchsichtiges Material für die Platten verwendet werden, z.B. Acrylglas, Kunststoffolien etc. Der Plattenabstand wird in an sich bekannter Weise durch Abstandskügelchen aus einem Polymer mit einem Durchmesser von 2µ erzielt. Die Platten haben somit einen Abstand von d = 1,8µ voneinander. Vor der vorderen Platte 2 befindet sich ein Polarisator 4, der vorzugsweise mit der Platte verbunden, beispielsweise aufgeklebt ist. Entsprechend ist der hinteren Platte 3 ein Polarisator 5 zugeordnet.

Auf ihren dem Flüssigkristall zugewandten Oberflächen weisen die Platten 2, 3 die üblichen, zur Darstellung von Zeichen oder Bildpunkten segmentierten Elektrodenbeschichtungen auf. Auf dem hier dargestellten Ausschnitt aus einer Zelle ist lediglich ein einzelnes Elektrodensegment 6 auf der Platte 2 und ein gegenüberliegendes Elektrodensegment 7 auf der rückwärtigen Platte 3 gezeigt.

Die dem Flüssigkristall zugewandten, d.h. inneren, Oberflächen der Glasplatten sind ausserdem so behandelt, dass sie auf die angrenzenden Flüssigkristallmoleküle eine Richtwirkung ausüben und damit die Richtung des Direktors bestimmen. Das Ergebnis dieser Behandlung wird für den Zweck dieser Beschreibung als Oberflächenorientierung bezeichnet.

Eine bekannte Möglichkeit zur Erzielung der Oberflächenorientierung besteht darin, die inneren Oberflächen der Glasplatten mit einer PVA-Schicht zu versehen, die in einer Richtung gerieben wurde. Die Reibrichtungen an beiden Platten sind ungefähr parallel.

Durch Messungen an Zellen, bei denen nur eine Platte gerieben ist, wurde gefunden, dass die eingangs erwähnten Versetzungslinien um einen Winkel α in der Grösse von 4° bis 8° gegenüber der Reibrichtung gedreht sind, und zwar für eine gegebene Flüssigkristallmischung immer mit demselben Drehsinn bezüglich der Richtung der Normalen auf die Flüssigkristallschicht. Daraus ergibt sich, dass es besonders vorteilhaft ist, die beiden Platten so zu reiben, dass die Versetzungslinien in der Nähe der Platten parallel verlaufen, d.h. eine der Platten wird gegenüber der anderen um den Winkel 2α gedreht gerieben. Auf diese Weise werden Störungen der Parallelität der Versetzungslinien, die bei exakt parallelem Reiben der beiden Platten auftreten können, vermieden.

Eine andere Möglichkeit, optimale Parallelität der Versetzungslinien zu erreichen besteht darin, nur eine der beiden Platten zu reiben.

Allgemein ist anzunehmen, dass die beiden bistabilen Zustände umso stabiler sind, je besser die Parallelität der Versetzungslinien ist.

Andere Möglichkeiten der Oberflächenorientierung sind bekanntlich das Schrägaufdampfen orientierender Schichten, etc.

Die Oberflächenorientierung findet vor allem in der S_{A}-Phase oberhalb der S_{C}*-Phase statt und bewirkt, dass sich die smektischen Ebenen senkrecht zur Reibrichtung anordnen (sog. Bücherbrett-Struktur). Die Oberflächenorientierung in der S_{A}-Phase auf den beiden Platten ist durch die kurzen Pfeile dargestellt. Die Richtung der Schnittlinien der smektischen Ebenen mit der Glasplatte ist mit dem Pfeil 8 bezeichnet. Beim Uebergang zur S _{C}*-Phase bleibt die Richtung dieser Ebenen, oder wenigstens die Richtung der Schnittgeraden der smektischen Ebenen mit den Elektrodenflächen, erhalten. Der Direktor selbst kann von der Reibrichtung wegdrehen.

Der zur vorderen Platte gehörende Polarisator 4 ist so angeordnet, dass er mit der Helixachse bzw. mit der Richtung der Versetzungslinien einen Winkel β einschliesst. Der zur rückseitigen Platte gehörige Polarisator ist gegen den vorderen Polarisator um ein Winkel von 90° verdreht. Die Polarisationsrichtungen sind in Fig. 1 mit den langen Pfeilen dargestellt. Diese Anordnung der Polarisatoren stellt ein bevorzugtes Ausführungsbeispiel dar. Es sind andere Polarisatoranordnungen möglich, mit denen ebenfalls gute Ergebnisse erzielbar sind. Die geeigneten Polarisatoranordnungen sind ohne weiteres durch einfaches Optimieren bestimmbar.

Der Flüssigkristall 1 ist ein chiraler smektischer ferroelektrischer, in der Literatur häufig als smektisch C (S_{C}) bezeichneter Flüssigkristall. Solche Flüssigkristalle sind aus der Literatur bekannt. Sie zeichnen sich dadurch aus, dass ihre Moleküle nicht senkrecht zu den smektischen Ebenen, sondern unter einem bestimmten Winkel, dem smektischen Kippwinkel Θₒ, angeordnet sind. Die Chiralität besteht darin, dass ohne Einflüsse von Wänden oder elektrischen Feldern die Molekülrichtungen nicht in allen Schichten zueinander parallel sind, sondern von Schicht zu Schicht gegeneinander verdreht sind, sodass insgesamt eine schraubenförmige Verwindung entsteht.

Der Flüssigkristall ist vorzugsweise eine Mischung aus einer achiralen S_{C} Host-Mischung bestehend aus mindestens zwei LC-Komponenten, von denen mindestens eine eine gekippte smektische Phase aufweist (z.B. S_{C}), sowie einem oder mehreren chiralen Dotierstoffen die einzeln oder zusammen eine Helixganghöhe (Pitch p) p > 1µm induzieren, wobei die spontane Polarisierbarkeit der Gesamtmischung P > 10nC/cm² und der S_{C}-Kippwinkel der Endmischung Θ > 10° betragen. Besonders bevorzugt sind die Werte p < 0,8 µm, P > 20nC/cm² und Θ > 17°.

Speziell haben sich Mischungen aus folgenden Komponenten als geeignet erwiesen:
1. 5-30 Gew.% eines Phenylbenzoates mit einem über eine flexible Gruppe gebundenen Cyclohexylrest.
   Solche Substanzen sind beispielsweise in EP-A-0269963 (Formel IX) beschrieben.
2. 30-85 Gew.% andere S_{C}-Materialien, wie sie in der vorgenannten EP-A 0269963 beschrieben sind, z.B. Ester (Formel VI), Phenylpyrimidine (Formel VII), Phenylpyridine (Formel VIII), alkenylsubstituierte Verbindungen (Formel X), tricyclische Pyrimidine (Formel XI) und Dioxanderivate (Formel I).
3. 10-40 Gew.% chirale Dotierstoffe mit zwei endständigen chiralen Gruppen, wie sie in der europäischen Patentanmeldung EP-A-0 339 414 (Nr. 89106808.2) (Formel I) beschrieben oder auch in EP-A-0213841 und WO 87/05017 offenbart sind.
   Bevorzugte chirale Dotierstoffe sind die optisch aktiven Verbindungen der allgemeinen Formel 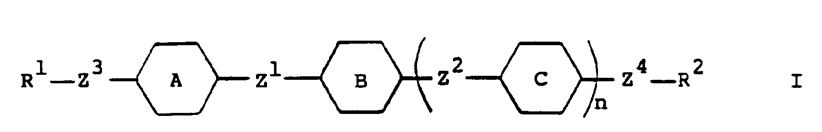 worin n für die Zahl 0 oder 1 steht; die Ringe A, B und C unabhängig voneinander unsubstituiertes oder mit Halogen, Cyano, Methyl und/oder Methoxy substituiertes 1,4-Phenylen bedeuten, in welchem gegebenenfalls 1 oder 2 CH-Gruppen durch Stickstoff ersetzt sind, oder einer der Ringe A, B und C auch trans-1,4-Cyclohexylen bedeutet; Z¹ und Z² unabhängig voneinander eine einfache Kovalenzbindung, -CH₂CH₂-, -OCH₂-, -CH₂O-, -COO- oder -OOC- bezeichnen; Z³ und Z⁴ unabhängig voneinander eine einfache Kovalenzbindung, Sauerstoff, -COO- oder -OOC- bezeichnen; R¹ und R² unabhängig voneinander das Radikal eines optisch aktiven Terpenalkohols nach Abspaltung der Hydroxygruppe oder eine chirale Gruppe -C*HX¹-R³, -CH₂-C*HX¹-R³, -C*H(CH₃)-COOR³, -C*HR⁴-COOR⁴, -C*H(CH₃)-CH₂OR³, -C*H(CH₃)-CH₂COOR³ oder -C*H(CH₃)-CH₂CH₂OR³ darstellen; C* ein chirales Kohlenstoffatom bezeichnet; X¹ Fluor, Chlor, Cyano, Methyl, Hydroxy, Methoxy oder Methoxycarbonyl darstellt; R³ Alkyl oder Alkenyl bedeutet, und R⁴ Phenyl bezeichnet.

In obiger Formel I bezeichnen vorzugsweise Z¹ und Z² je eine einfache Kovalenzbindung. Ferner sind vorzugsweise alle Ringe A, B und C aromatisch, insbesondere 1,4-Phenylen. Z³ steht vorzugsweise für -OOC- und Z⁴ steht vorzugsweise für -COO-.

Eine bevorzugte Gruppe von chiralen Dotierstoffen sind jene optisch aktiven Verbindungen der Formel I, worin n für die Zahl 1 steht; die Ringe A, B und C unabhängig voneinander unsubstituiertes oder mit Halogen, Cyano, Methyl und/ oder Methoxy substituiertes 1,4-Phenylen bedeuten, in welchem gegebenenfalls 1 oder 2 CH-Gruppen durch Stickstoff ersetzt sind; Z¹ und Z² je eine einfache Kovalenzbindung bezeichnen; Z³ -OOC- und Z⁴ -COO- bedeuten; R¹ und R² unabhängig voneinander das Radikal eines optisch aktiven Terpenalkohols nach Abspaltung der Hydroxygruppe oder eine chirale Gruppe -CH*X¹-R³ oder -CH₂ -C*HX¹-R³ darstellen; C* ein chirales Kohlenstoffatom bezeichnet; X¹ Fluor, Chlor, Cyano, Methyl oder Methoxy darstellt; und R³ Alkyl oder Alkenyl bedeutet.

Der Ausdruck "unsubstituiertes oder mit Halogen, Cyano, Methyl und/oder Methoxy substituiertes 1,4-Phenylen, in welchen gegebenenfalls 1 oder 2 CH-Gruppen durch Stickstoff ersetzt sind" umfasst im Rahmen der vorliegenden Erfindung Gruppen wie 1,4-Phenylen, Fluor-1,4-phenylen, Chlor-1,4-phenylen, Cyano-1,4-phenylen, 2,3-Dicyano-1,4-phenylen, Methyl-1,4-phenylen, Methoxy-1,4-phenylen, Pyridin-2,5-diyl, Pyrimidin-2,5-diyl, Pyrazin-2,5-diyl, Pyridazin-3,6-diyl und dergleichen.

Der Ausdruck "Halogen" umfasst Fluor, Chlor, Brom und Jod, vorzugsweise Fluor und Chlor.

Der Ausdruck "Radikal eines optisch aktiven Terpenalkohols nach Abspaltung der Hydroxygruppe" bezeichnet die Gruppe T eines optisch aktiven Terpenalkohols der Formel TOH. Der Ausdruck "Terpenalkohol" ist dem Fachmann geläufig z.B. aus Römpps Chemie-Lexikon, Band 6 (1977), und bezeichnet die von Monoterpenen abgeleiteten Alkohole. Der Ausdruck "Monoterpen" umfasst Terpenkohlenwasserstoff C₁₀H₁₆ und deren Hydrierungs- und Dehydrierungsderivate. Beispiele bevorzugter optisch aktiver Terpenalkohole sind (1R,2S,5R)-(-)-Menthol, (1S,2R,5R)-(+)-Isomenthol, (1S, 2S,3S,5R)-(+)-Isopinocampheol, (1S)-(-)-Borneol, (1R)-(-)-Myrtenol, (1S,2S,5R)-(+)-Neomenthol, (-)-Carveol, (+)-Dihydrocarveol, (+)-Terpinen-4-ol, (+)-α-Terpineol und dergleichen.

Die Ausdrücke "Alkyl" und "Alkenyl" umfassen geradkettige und verzweigte Reste mit vorzugsweise höchstens 15 Kohlenstoffatomen, wie Methyl, Aethyl, Propyl, Isopropyl, Butyl, Isobutyl, Pentyl, Hexyl, Heptyl, Octyl, Nonyl, Vinyl, 1-Propenyl, 1-Butenyl, 1-Pentenyl, Allyl, 2-Butenyl, 2-Pentenyl, 3-Butenyl, 3-Pentenyl, 4-Pentenyl, 5-Hexenyl, 6-Heptenyl und dergleichen.

Die Herstellung der chiralen Dotierstoffe ist in den oben angegebenen Literaturstellen beschrieben oder kann nach analogen Methoden erfolgen.

Die folgenden Verbindungen sind Beispiele besonders bevorzugte chiraler Dotierstoffe (wobei C eine kristalline, S_{C}* eine chiral smektisch C, S_{A} eine smektisch A, Ch eine cholesterische und I die isotrope Phase bezeichnen, die spontane Polarisation P_{S} für ein Gemisch aus 5 Gew.-% des Dotierstoffes und 95 Gew.-% 4-Octyloxybenzoesäure-4-hexyloxyphenylester gemessen wurde und P_{S}^{e} den extrapolierten Wert der spontanen Polarisation bezeichnet):
4,4˝-Di-[2(R)-cyano-1-propyloxycarbonyl]-p-terphenyl, Smp. 179, 2°C, P_{S} = 5,53nC/cm², P_{S}^{e} = 111nC/cm²;
4,4˝-Di-[2(S)-chlor-2-pentyloxycarbonyl]-p-terphenyl, Smp. (C-S_{C}*) 106°C, S_{C}*-S_{A} 110,2°C, S_{A}-Ch 140°C, Klp. (Ch-I) 141°C, P_{S} = 6,8nC/cm², P_{S}^{e} = 136nC/cm²;
4,4˝-Di-[2(R)-chlor-4-methyl-1-pentyloxycarbonyl]-p-terphenyl, Smp. 169,4-170,0°C, P_{S} = 9nC/cm², P_{S}^{e} = 180nC/cm²;
4,4˝-Di-[2(S)-cyano-4-methyl-1-pentyloxycarbonyl]-p-terphenyl, Smp. 129-131°C, P_{S} = 20nC/cm², P_{S}^{e} = 400nC/cm²;
4,4˝-Di-[1(R),2(S),5(R)-menthyloxycarbonyl]-p-terphenyl, Smp. 168-169°C, P_{S} = 11nC/cm², P_{S}^{e} = 220nC/cm²; 4,4˝-Di-[2(R)-cyano-2-pentyloxycarbonyl]-p-terphenyl, P_{S} = 20 nC/cm², P_{S}^{e} = 400nC/cm²;
4,4˝-Di-[2(S)-chlor-1-butyloxycarbonyl]-p-terphenyl, Smp. (C-S_{A}) 137,3°C, S_{A}-Ch 139,3°C, Klp. (Ch-I) 153°C, P_{S} = 3,4nC/cm², P_{S}^{e} = 68nC/cm²;
4,4˝-Di-[2(R)-cyano-1-butyloxycarbonyl]-p-terphenyl, Smp. 129,9°C, P_{S} = 12,5nC/cm², P_{S}^{e} = 250nC/cm²;
4,4˝-Di-[2(R)-cyano-1-hexyloxycarbonyl]-p-terphenyl, P_{S} = 23nC/cm², P_{S}^{e} = 460nC/cm²;
4,4˝-Di-[2(S)-chlor-3-methyl-2-butyloxycarbonyl]-p-terphenyl, Smp. 171,1°C, P_{S} = 8,0nC/cm², P_{S}^{e} = 160nC/cm²;
4,4˝-Di-[2(R)-cyano-3-methyl-1-butyloxycarbonyl]-p-terphenyl, Smp. 132,9°C, P_{S} = 11,2nC/cm², P_{S}^{e} = 224nC/cm²;
4,4˝-Di-[1(S)-(methoxycarbonyl)äthoxy]-p-terphenyl, Smp. 142,6°C, P_{S} = 15,4nC/cm², P_{S}^{e} = 308nC/cm²;
4,4˝-Di-[1(S)-(äthoxycarbonyl)äthoxy]-p-terphenyl, Smp. 91,3°C, P_{S} = 13,75nC/cm², P_{S}^{e} = 275nC/cm²;
4,4˝-Di-[1(S)-methyl-2-(äthoxycarbonyl)äthoxy]-p-terphenyl, P_{S} = 3,75nC/cm², P_{S}^{e} = 75nC/cm².

Besonders geeignete Verbindungen für die oben genannten S_{C}-Materialien sind die Phenylpyrimidine der in EP-A-0 269963 angegebenen Formel VII. Vorzugsweise enthält das S_{C}-Material bzw. die achirale S_{C} Host-Mischung mindestens etwa 50 Gew.-% an solchen Verbindungen.

Eine besonders bevorzugte Mischung besteht aus:
10 Gew.% 4-Decyloxy-2,3-difluorbenzoesäure-4-[2-trans-4-heptylcyclohexyl)äthyl]phenylester,
21 Gew.% 5-Octyl-2-(4-octyloxyphenyl)pyrimidin,
21 Gew.% 5-Octyl-2-(4-nonyloxyphenyl)pyrimidin,
21 Gew.% 5-Octyl-2-(4-decyloxyphenyl)pyrimidin,
27 Gew.% 4,4˝-Di-[2(S)-octyloxycarbonyl]-p-terphenyl

Die genaue Konfiguration der Flüssigkristallschicht ist allerdings nicht bekannt. Es ist anzunehmen, dass auch innerhalb der Schichten Verwindungen etc. bestehen, die derzeit nicht messbar sind. Ausserdem befindet sich der Flüssigkristall in einem dynamischen Gleichgewicht, d.h. die Strukturen sind dauernden Veränderungen unterworfen. Aus diesem Grund ist in der Zeichnung keine Molekülanordnung gezeigt.

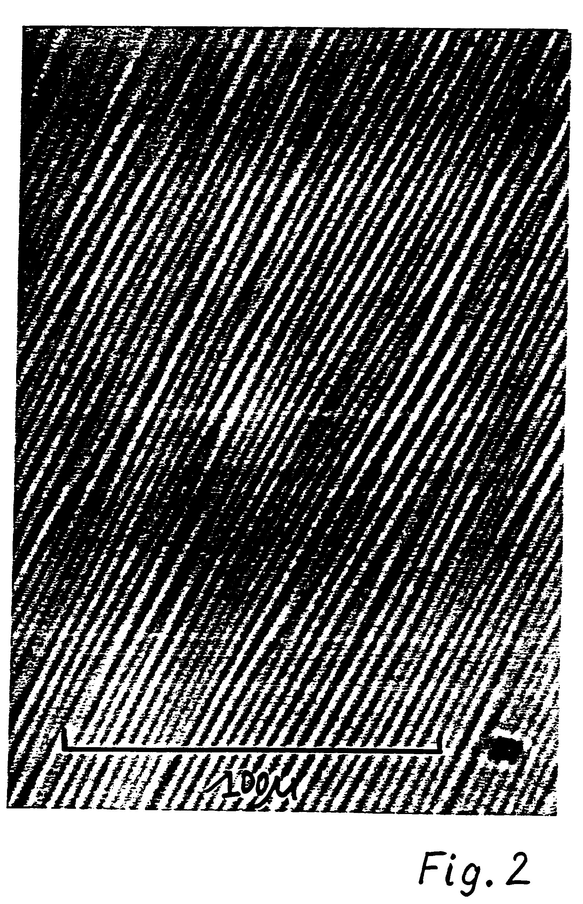

Die Textur des Flüssigkristalls in der Zelle ist hingegen charakteristisch und von anderen Texturen unterscheidbar, die aus dem Stand der Technik bekannt sind. Wie in Fig.2 gezeigt, ist die Textur, die mit einer Zelle nach der vorliegenden Erfindung mit einer 2µ dicken Schicht ohne angelegte Spannung und zwischen gekreuzten Polarisatoren aufgenommen wurde, durch weitestgehend parallele Versetzungslinien gekennzeichnet. Nur eine Platte besitzt eine Oberflächenorientierung durch Reiben.

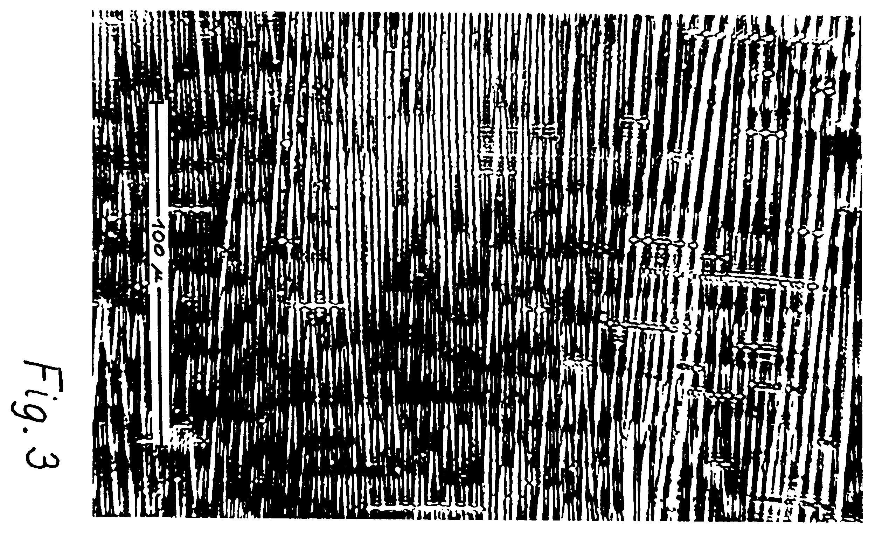

Die zum Vergleich in Fig.3 gezeigte Textur ist mit einer gleich aufgebauten DHF-Zelle aufgenommen, wobei im Unterschied zu vorher beide Platten parallel zueinander gerieben sind. Es ist ohne weiteres ersichtlich, dass diese Textur eine Richtungsunordnung aufweist und somit von der Textur gemäss Fig.2 stark verschieden ist.

Die Flüssigkristallmischung wird heiss, d.h. im isotropen Zustand durch Kapillarwirkung zwischen die Platten gefüllt und unter angelegter Wechselspannung von 30V, 10kHz auf Zimmertemperatur abgekühlt.

Wird an die Elektroden 6 und 7 eine Spannung angelegt, so entsteht im flüssigen Kristall ein elektrisches Feld, das eine Umorientierung der Moleküle bewirkt. Von der symbolisch angedeuteten Spannungsquelle 10 kommen im praktischen Fall periodische Signale oder auch Ansteuerimpulse, die bei der vorliegenden Zelle, wie nachstehend noch im einzelnen erläutert, gegensinnige Polarität haben können.

Ist die Zelle einmal durch ein elektrisches Feld formiert worden, die Helix also aufgewunden, so befindet sich der Direktor ohne angelegtes Feld in einer der beiden bistabilen Lagen. Durch Anlegen einer Spannung der geeigneten Polarisation kann er in die andere stabile Lage gekippt werden, was eine Aenderung der Lichtdurchlässigkeit der Zelle zur Folge hat. Der optische Kontrast ist am grössten, wenn erstens der Winkel β so gewählt wird, dass in der einen stabilen Lage die Lichtdurchlässigkeit minimal ist, und wenn zweitens der Schaltwinkel (Winkel zwischen den Projektionen des Direktors in den beiden stabilen Lagen auf die Ebene der Elektroden) möglichst gleich 45° ist.

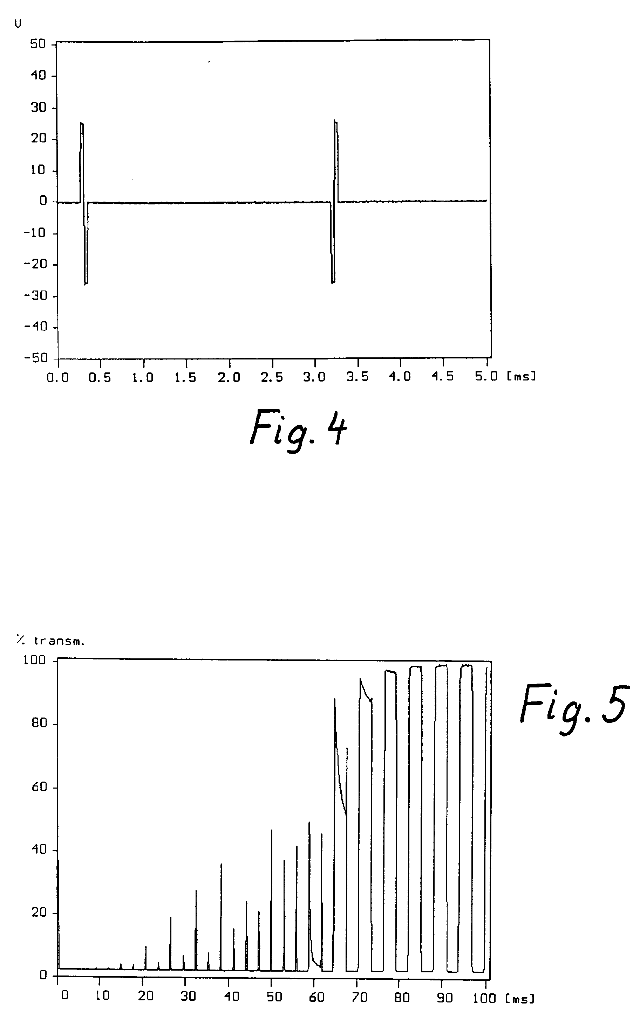

Mit einer derart aufgebauten Zelle wurden Testmessungen durchgeführt. An die Zelle wurde eine Pulsfolge angelegt von der in Fig. 4 ein Ausschnitt gezeigt ist. Die Folge nimmt linear von Null bis auf 26 V zu. Das letzte Pulspaar ist dargestellt. Der linke bipolare Puls schaltet die Zelle von hell zu dunkel, der rechte von dunkel zu hell. Die Pulsbreite des positiven und negativen Pulses ist je 40µsec. Wichtig bei dieser Ansteuerung ist, dass der Mittelwert der angelegten Spannung Null ist, so dass die elektrochemische Zersetzung des Flüssigkristalles vermieden wird.

Solange die Pulsamplitude noch unter der für diese Pulslänge gültigen Schaltzeit liegt, ändert sich die Lichttransmission kaum, oberhalb findet vollständiges Schalten statt. Diese Eigenschaft ist wichtig für das Multiplexieren. Fig. 5 zeigt die entsprechende Transmissionskurve für die obige Flüssigkristall-Mischung in einer 1.8µ dicken Zelle und mit der in Fig. 4 gezeigten Pulsfolge bei 25°C.

## Patentansprüche

1. Flüssigkristallanzeigezelle mit einer chiralen ferroelektrischen smektischen Flüssigkristallschicht (1) aus einer achiralen S_{C} Host-Mischung, bestehend aus mindestens zwei Flüssigkristall-Komponenten, von denen mindestens eine eine gekippte smektische Phase aufweist, sowie einem oder mehreren chiralen Dotierstoffen die einzeln oder zusammen eine Helixganghöhe p < 1 µm in der Mischung induzieren, mit einer spontanen Polarisierbarkeit P > 10 nC/ cm² und einem S_{C}-Kippwinkel von Θ > 10°, und deren Struktur durch Einwirkung eines elektrischen Feldes derart beeinflussbar ist, dass sich ihre optische Anisotropie bistabil ändert,
einem Paar den Flüssigkristall einschliessender, transparenter Platten (2,3), die Elektroden (6,7) zur Erzeugung eines elektrischen Feldes im Flüssigkristall aufweisen und von denen wenigstens eine mit einer die Moleküle des Flüssigkristalls ausrichtenden Oberflächenstruktur versehen ist,
und zwei gekreuzte Polarisatoren (4,5), von denen einer vor und einer hinter der Flüssigkristallzelle angeordnet ist,
dadurch gekennzeichnet, dass die Flüssigkristallzusammensetzung so gewählt und durch Anlegen eines elektrischen Wechselfeldes an die Elektroden bis zum Erreichen der Mesophase formiert ist, dass die Schicht eine nicht-homogene Struktur besitzt, die zwischen den gekreuzten Polarisatoren eine Textur aus hellen und dunklen parallelen Streifen zeigt.

2. Flüssigkristallzelle nach Anspruch 1, dadurch gekennzeichnet, dass beide Platten (2,3) mit der genannten Oberflächenstruktur versehen sind und die Orientierungsrichtungen um 8 bis 16° gegeneinander versetzt sind.

## Claims

1. A liquid crystal display cell having a chiral ferroelectric smectic liquid crystal layer (1) consisting of an achiral S_{c} host mixture consisting of at least two liquid crystal components, at least one of which has a tilted smectic phase, and one or more chiral dopants which individually or together induce a helical pitch p < 1 µm in the mixture, with a spontaneous polarisability P > 10 nC/cm² and an S_{c} tilting angle of 0 > 10°, and the structure of which can be so influenced by the action of an electric field that its optical anisotropy changes in bistable manner,
a pair of transparent plates (2, 3) enclosing the liquid crystal and comprising electrodes (6, 7) for generating an electric field therein, at least one plate having a surface structure which aligns the molecules of the liquid crystal,
and two crossed polarisers (4, 5), one disposed in front and one behind the liquid crystal cell,
characterised in that the liquid crystal composition is so selected and shaped, by application of an electric alternating field to the electrodes until the mesophase is reached, that the layer has a non-homogeneous structure having a texture of light and dark parallel strips between the crossed polarisers.

2. A liquid crystal cell according to claim 1, characterised in that both plates (2, 3) are provided with the said surface structure and the directions of orientation are offset by 8 to 16° relatively to one another.

## Revendications

1. Cellule d'affichage à cristaux liquides, comportant une couche de cristaux liquides (1) smectique ferroélectrique chirale, composée d'un mélange hôte S_{C} achiral constitué d'au moins deux composants de type cristal liquide dont au moins un présente une phase smectique inclinée, ainsi que d'une ou plusieurs substances de dopage chirales qui, individuellement ou ensemble, induisent dans le mélange un pas d'hélice p < 1 µm, avec une polarisabilité p > 10 nC/cm² et un angle d'inclinaison S_{C} de Θ > 10°, et dont la structure peut être influencée, sous l'effet d'un champ électrique, de manière que son anisotropie optique soit modifiée de façon bistable,
d'une paire de plaques transparentes (2,3) renfermant le cristal liquide, qui comportent des électrodes (6,7) pour la production d'un champ électrique dans le cristal liquide, et dont au moins une est munie d'une structure superficielle orientant les molécules du cristal liquide,
et de deux polariseurs croisés (4,5), dont un est disposé en avant de la cellule à cristaux liquides et l'autre est disposé en arrière de celle-ci,
caractérisée en ce que la composition de cristaux liquides est choisie et formée, par application d'un champ électrique sur les électrodes jusqu'à l'obtention de la mésophase, de manière que la couche possède une structure non homogène qui présente, entre les polariseurs croisés, une texture constituée de bandes claires et de bandes foncées parallèles.

2. Cellule à cristaux liquides selon la revendication 1, caractérisée en ce que les deux plaques (2,3) sont pourvues de la structure superficielle citée et les directions d'orientation sont décalées de 8 à 16° les unes par rapport aux autres.
